# EUROPEAN PATENT SPECIFICATION

(11) **EP 2 776 824 B1**
(45) Date of publication and mention of the grant of the patent: **23.12.2020**
(21) Application number: 12841894.4
(22) Date of filing: 19.10.2012
(51) Int. Cl.: G01N 29/24, G07D 5/00, G01N 27/90, G07F 1/06

(54) **METHOD AND APPARATUS FOR AUTHENTICATING SOLID OBJECTS**
VERFAHREN UND VORRICHTUNG ZUR AUTHENTIFIZIERUNG VON FESTSTOFFOBJEKTEN
PROCÉDÉ ET APPAREIL D'AUTHENTIFICATION D'OBJETS SOLIDES

(30) Priority: 21.10.2011 FI 20116044
(43) Date of publication of application: 17.09.2014
(73) Proprietor: Suomen Rahapaja Oy, 01740 Vantaa (FI)
(72) Inventor: PINOMAA, Tuomas, Mikael, FI-00690 Helsinki (FI); JÄRVINEN, Ilari, FI-00320 Helsinki (FI); JUOKSUKANGAS, Jari, FI-00730 Helsinki (FI); KALLIOKOSKI, Sami, FI-02180 Espoo (FI); MATTILA, Marko, FI-01700 Vantaa (FI)
(74) Representative: Papula Oy
(86) International application number: PCT/FI2012/051006
(87) International publication number: WO 2013/057378

(56) References cited:
- EP-A2- 0 227 453
- EP-A2- 0 787 980
- EP-A2- 0 787 980
- WO-A1-85/03577
- WO-A2-2009/156862
- US-A- 4 348 903
- US-A- 5 808 202
- US-A1- 2008 087 091
- US-A1- 2008 087 091
- US-A1- 2011 023 610

## Description

### FIELD OF THE INVENTION

The present invention relates to a method and an apparatus for authenticating solid objects by means of an electromagnetic acoustic transducer (EMAT) technique. More specifically, it relates to a method and an apparatus for authenticating solid metal, metalloid or non-metal objects being electrically conductive at least at their skin depth and having dimensions of one or more micrometres up to tens of centimetres. The method is based on propagation of a mechanical wave in the objects and measurements performed using electromagnetic-acoustic transducers (EMATs). The present invention also relates to an apparatus used for authenticating objects comprising an EMAT.

### BACKGROUND OF THE INVENTION

Authentication of a certain object from a large group of similar objects made of the same material and further classifying the object based on its inner structure is highly desirable in the modern metal and semiconductor industries, in particular mint industry. Typically, the material of an object is recognized by means of ultrasonic measurement, or using cameras at different wavelengths, metal detectors and sensors of other types. In mint industry, coin validators use eddy current coils sending a square signal and time modulation on the receiving coils. For identification purposes, an electromagnetic signature (EMS) is then created from the studied coin.

At present, the established ultrasonic measurement methods, such as EMAT, do not perform well when trying to identify a certain object from a large group of objects having a similar structure. Said methods are mainly used for searching cracks, fractures or other types of structural discontinuity within the object. The known methods are used to identify defects and other unwanted structural discontinuities within an object and do not perform well when a fast authentication, e.g. hundreds or several thousands of objects in a minute, is required. However, in applications such as coin authentication and semiconductor membrane characterization, a method providing a comprehensive overview of the object's structure and/or fast authentication of thousands of objects is desirable.

Furthermore, methods for monitoring defects in objects by means of an electromagnetic acoustic transducer technique are known from US-A-4348903 or US-A-2008/087091.

### PURPOSE OF THE INVENTION

The purpose of the present invention is to eliminate the drawbacks mentioned above. The purpose of the present invention is to provide a method and a system for authenticating solid objects.

### SUMMARY OF THE INVENTION

The invention relates to a method for authenticating solid objects by means of an electromagnetic acoustic transducer technique, comprising the following steps: generating an excitation current in the form of a pulse, generating a dynamic magnetic field for applying an electromotive force to the object to be authenticated, generating an outer magnetic field in order to create a Lorentz force, inducing eddy currents to the surfaces and edges of the object to be authenticated, thereby causing the lattice of the object to vibrate around its equilibrium position by means of the Lorentz force acting on the eddy currents, thus producing a mechanical wave propagating in the lattice of the object for inducing eddy currents by means of the propagating mechanical wave, obtaining the object's structure specific voltage signal, digitizing the object's structure specific voltage signal, obtaining at least one characteristic feature from the object's digitized structure specific voltage signal, where the object's digitized structure specific voltage signal comprises the form of the signal between the voltage pulses, authenticating the object by comparing said at least one characteristic feature to at least one corresponding characteristic feature obtained from at least one other object's digitized structure specific voltage signal.

Here, by authentication is meant identification of the object as being either a part of a group of similar objects, or to be dissimilar compared to other objects. Therefore, authentication of an object comprises e.g. validation and identification of fake, forgery or counterfeit objects from a group of similar objects - such as authentication of coins, tokens, jewelry, etc. Naturally, an object to be authenticated by means of an EMAT technique shall be electrically conductive at least at its skin depth, which is defined by material properties and the properties of the excitation pulse; this is obvious for a man skilled in the art.

The method according to the present invention seeks to eliminate the drawbacks of the prior art by studying the form of the measurement signal in general, i.e. measuring the amplitude and amount of induced voltage pulses during a certain time period in addition to monitoring the shape of the signal between the voltage pulses. Said measurements provide sufficient information to form a general view, a so called fingerprint of the signal, which is identical in objects having an identical inner structure in addition to identical shape and weight. However, the slightest differences in the object's structure result in different amplitudes and shapes of the measurement signal, enabling precise identification of solid objects from the reference group of objects, which may appear identical during a visual inspection or other kinds of measurements.The invention also relates to an apparatus as claimed in claim 12.

The present method and apparatus provide not only authentication of natural structural differences of solid objects, but also structural differences (so called structural coding) that are artificially formed within the object in order for the object to be reliably authenticated.

According to one embodiment of the present invention, the comparison is done by using PLS and/or PLSDA algorithms.

In one embodiment of the present invention, the method further comprises the step of authenticating the object by comparing the characteristic feature obtained from the object's digitized structure specific voltage signal to at least one corresponding characteristic feature obtained from at least one other object's digitized structure specific voltage signal

Preferably, the comparison is done by using PLS and/or PLSDA algorithms.

In one embodiment of the present invention, the apparatus further comprises: means for obtaining at least one characteristic feature from the measurement data, and means for authenticating the object by comparing said at least one characteristic feature to at least one corresponding characteristic feature obtained from at least one other object's digitized structure specific voltage signal.

In one embodiment of the present invention, the means for generating an excitation current in the form of a current pulse are at least one commercially available pulse generator, such as a pulse pattern generator (PPG) or generator using power field-effect transistors (power FET).

In one embodiment of the invention, the peak-to-peak value of the excitation current in the form of a pulse ranges from 200mA to 100A. In said embodiment, a commercially available pulse generator is used to generate an excitation pulse to the transmitter coil, said pulse having the peak-to-peak value from 200mA to 100A. In another embodiment of the present invention, when the object to be authenticated has a distinctive mechanical resonance, a pulse having the peak-to-peak value from 200mA to 100A with multiple periods (i.e. 4-30 periods) may be used. An object has a distinctive mechanical resonance when it, due its crystal structure, tends to vibrate with a greater amplitude at a certain frequency (i.e. resonance frequency) than other frequencies. In that case, the measurement pulse generation may be tuned into electrical resonance at the same frequency as the mechanical resonance by adding parallel capacitance to the transmitting coil used in the measurement setup.

According to the present invention, the waveform of the generated excitation current pulse is at least half a period burst of a sinusoidal signal. In one embodiment of the present invention, the waveform of the generated excitation current pulse is at least one period burst of a sinusoidal signal. In another embodiment of the present invention, the waveform of the generated excitation current pulse is at least one period burst of a rectangular signal. In another embodiment of the present invention, the generated excitation current pulse is a single period pulse, i.e. at least one shock excitation pulse.

In yet another embodiment, the waveform of the generated excitation current pulse is a sinusoidal signal having one period or half a period, which allows a simple, cheap and fast (authentication of several thousand objects in a minute) authentication of objects having about the size of a coin compared e.g. to known EMAT-measurement systems that are used for a general characterization of an object. Authentication done using a sinusoidal signal having either one or half a period requires semi-broadband filtering and amplifying so that irrelevant excitation effects - such as ringing after the pulse transmitting, coherent noise and irrelevant vibration components caused by the half or one period pulse excitation - are filtered or otherwise eliminated. Induced and received reflection pulses are distinguishable from one another (filter-amplifier has a small enough Q-value) in a manner that the relevant part of the signal - the desired wave/vibration component containing structural information about the object under authentication - can still be amplified enough (about 75dB or more) to get proper measurement results.

One example of the performance of such a filter-amplifier (when the excitation pulse frequency is 5MHz and the period is half or one period) is a third order high-pass filter, amplifying 80dB in the band of 1-10MHz and fading slowly and with cycles to 0dB at 60MHz. From 0-999kHz, the amplification rate rises by 60dB/decade. This amplifier-filter is combined with DSP-methods to extract different wave components and their behaviour from the received and digitized voltage signal. The method presented in this embodiment allows authentication of objects that may have a significant acoustic impedance and dense structure and high inner tension fields, such as objects being conductive at least at the skin depth and having dimensions around tens of millimetres (e.g. coins).

When using a sinusoidal signal having one period or half a period as a generated excitation current pulse together with a spiral shaped transmitting and receiving coil/coils, the secondary wave components (longitudinal waves of different frequencies) can also be created and received alongside the primary wave component - a radially polarized shear wave. Also, the primary wave component that differs from the excitation pulses' main frequency (e.g. 5MHz) and is created simultaneously when a half or one period excitation pulse is used can sometimes propagate more efficiently inside an object during authentication, in which case the digitized voltage signal from that wave component can be utilized alongside the digitized voltage signal from the "correct" frequency wave component. This further improves the authentication done by EMAT-measurements.

In one embodiment of the present invention, the means for creating and transmitting a dynamic magnetic field is an electromagnetic coil which generates a dynamic magnetic field when the excitation current in the form of a current pulse passes through it. The magnetic flux density of the generated dynamic magnetic field depends e.g. on the peak-to-peak value of the generated excitation current pulse.

In one embodiment of the invention, the magnetic flux density of the generated outer magnetic field ranges from 0.1T to 3T when measured on the surface of the object to be authenticated. In another embodiment of the present invention, the magnetic flux density of the generated outer magnetic field ranges from 1T to 1.3T when measured on the surface of the object to be authenticated. The outer magnetic field may comprise either a static or dynamic magnetic field and there may be one or several outer magnetic field sources. In practice, in order to generate fields of over 3T one has to use expensive equipment, which restricts the upper limit of the outer magnetic field range. On the other hand, fields below 0.1T are in general too weak to produce desirable results, i.e. to displace or cause measurable vibrations in the lattice of the object to be authenticated.

Variation of the generated magnetic field causes an electromotive force in the measurement system. When applied to the object to be authenticated, the electromotive force induces eddy currents to the surfaces and edges of said object, thus causing the lattice of the object to vibrate around its equilibrium position when an outer magnetic field is present. Typical displacement of the lattice from its equilibrium position, required for a successful identification of any object, ranges from less than 1nm to 1mm. In one embodiment of the present invention, the displacement ranges from 80nm to 130nm and varies as the mechanical wave propagates.

The displacement of the lattice generates a mechanical wave which propagates within the lattice of the object. Generally, it is not desirable to displace the lattice more than 1mm from its equilibrium position, as it requires a very high power pulse in addition to a high static magnetic flux density, thus demanding the use of expensive instruments. On the other hand, vibration of the lattice having an amplitude smaller than 5nm from its equilibrium position damps out relatively quickly, in which case further measurements are not possible.

According to one embodiment of the invention, at least one characteristic feature obtained from the object's structure specific voltage signal her comprises at least one of the following: the number of the induced voltage pulses during a time period, the amplitude of the induced voltage pulses during a time period.

According to the present invention, any kind of a solid object being electrically conductive at least at its skin depth may be authenticated, whether it is a metal, metalloid, or non-metal object. According to one embodiment of the invention, the object to be authenticated comprises an electrical conductor and/or semiconductor. In particular, the object to be authenticated comprises at least one of the following: a coin, a token, a coin blank. Here, a token is a piece of metal, metal alloy or other composition used as a substitute for currency, e.g. a subway token or a casino token; a coin blank is the metal or metal alloy disc onto which a coin will be struck. The size, shape, weight and chemical composition of said coin, token, coin blank may vary, yet these parameters do not limit applicability of the present invention. Said objects may be manufactured either from one or from several different metals, metal alloys or other solid materials; they may also comprise holes, openings, grooves etc. Said coin or token may also comprise one, two, three or more parts, i.e. said coin comprises monometallic, bi-metallic, tri-metallic etc. coins or tokens. In addition, said coin may comprise an electroplated coin or token. It shall be noted that a bi-metallic coin is a coin comprising two parts: a ring part and a core part, and consists of at least one metal or metal alloy.

According to another embodiment of the invention, the object to be authenticated comprises at least one of the following: a semiconductive wafer, a semiconductive membrane, a semiconductive thin film, a semiconductive resonator element. Here, semiconductive means a material having a conductivity roughly in the range of 10³ to 10⁻⁸ Si/cm; a semiconductive wafer is a slice of semiconductive material having a thickness from several micrometers to tens of millimeters. In one embodiment of the present invention, semiconductive materials comprise at least one of the following: quartz, Si, AlN, ZnO, LiNbO₃, PTZ, PT, PVDF. Further, by a thin film it is meant here a layer of material ranging from below a nanometer to several micrometers in thickness, and having a lateral length to thickness aspect ratio that is higher than 1000 to 1. By a resonator element it is meant here a device vibrating either in a vertical or lateral plane and having different designs including, but not limited to, a comb, a cantilever (i.e. a beam anchored at only one end), a film and a spring.

According to another embodiment of the invention, the object to be authenticated comprises at least one of the following: a drill bit, a nut, a screw, a bolt, a blade, a cutter. According to one embodiment of the present invention, a drill bit is a cutting tool which is fabricated of a metal or metal alloy and used for creating cylindrical and non-cylindrical holes. The diameter of a drill bit may range from below 1 mm to over several centimeters. According to another embodiment of the present invention, a blade may comprise different metal or metalloid cutting edges of a tool, weapon, or machine; which cutting edge is designed e.g. to cut, chop, slice, etc.

The requirement for a successful identification is a possibility of mechanical wave propagation within the object. The propagation and reflections of a mechanical wave within the object determine the object's structure specific voltage signal which comprises information regarding the following properties: the size (e.g. thickness) of the object, possible structural discontinuities within the object's structure, material junctions, i.e. structural changes from one material to another, tension fields at a certain depth and a resonance frequency, if it exists. In addition, the object's structure specific voltage signal includes information regarding the following material properties of the object: propagation velocity or group velocity of the mechanical wave within the objects and its direction at a certain depth, conductivity at the skin depth, density, shear modulus, Young's modulus, Lamé's first parameter, grain structure estimates at different depths within the object.

In order to identify an object from a group of almost similar objects, the object's inner structure must have a structural deviation, a difference when compared to the inner structure of other similar objects. Said structural difference may comprise a cavity, a hole, a groove, a crack or other structural discontinuity or deformation located in different parts or at different depths inside the object, an inner or structural tension, a cavity filled with a material having a different inner structure than that of the object, boundaries or edges of different materials etc.

By using the present method and apparatus, it is possible to obtain digitized data of the object's structure specific voltage signal, a feature which may be very difficult or impossible to be obtained using other measurement apparatus, and further compare said digitized data to corresponding data obtained from other similar objects forming a reference group. As the result of identification, the object may be categorized as being identical to the reference group or being different from said group. Further, the present method and apparatus enable one to obtain at least one characteristic feature of the studied object. Said at least one characteristic feature may be further compared to corresponding characteristic features obtained from the reference group, thus categorizing the object as being identical to the reference group or being different from said group. In addition, said at least one characterizing feature obtained during the study may be assigned as a fingerprint of said object, important for later identification or verification of the object e.g. for security reasons.

For example, a metal object such as a coin may be authenticated, validated and/or identified using the present method. The authentication, validation and identification are performed by comparing obtained digitized data to the corresponding data obtained from the reference group of coins. Such a comparison will reveal a coin having a different inner structure from a large group of coins having a similar size, weight and material composition compared to the studied coin. Thus, the present method enables authentication of e.g. counterfeit and fake coins from a large group of similar coins.

After measuring and digitizing the object's structure specific voltage signal, at least the form of the signal between the voltage pulses is obtained from said data. The at least one characteristic feature may further omprise the number of the induced voltage pulses during a time period, the amplitude of the induced voltage pulses during a time period, the time period between the voltage pulses. The time period may vary; it may be e.g. several microseconds. After obtaining said at least one characteristic feature, said feature is digitally compared to the corresponding characteristic features, e.g. the average amplitudes measured from similar objects. The comparison reveals whether the object differs from the reference group or not.

The embodiments of the invention described hereinbefore may be used in any combination with each other. Several of the embodiments may be combined together to form a further embodiment of the invention. A method, a system or an apparatus to which the invention is related may comprise at least one of the embodiments of the invention described hereinbefore.

### BRIEF DESCRIPTION OF THE FIGURES

The accompanying drawings, which are included to provide a further understanding of the invention and constitute a part of this specification, illustrate embodiments of the invention and together with the description help to explain the principles of the invention. In the drawings:
Figure 1 is a flow chart illustrating a method for authenticating solid objects.
Figure 2 is a block diagram illustrating an apparatus for authenticating solid objects.
Figures 3a and 3b display different coin structures which can be authenticated using the present method and apparatus.

### DETAILED DESCRIPTION OF THE INVENTION

Reference will now be made in detail to the embodiments of the present invention, examples of which are illustrated in the accompanying drawings.

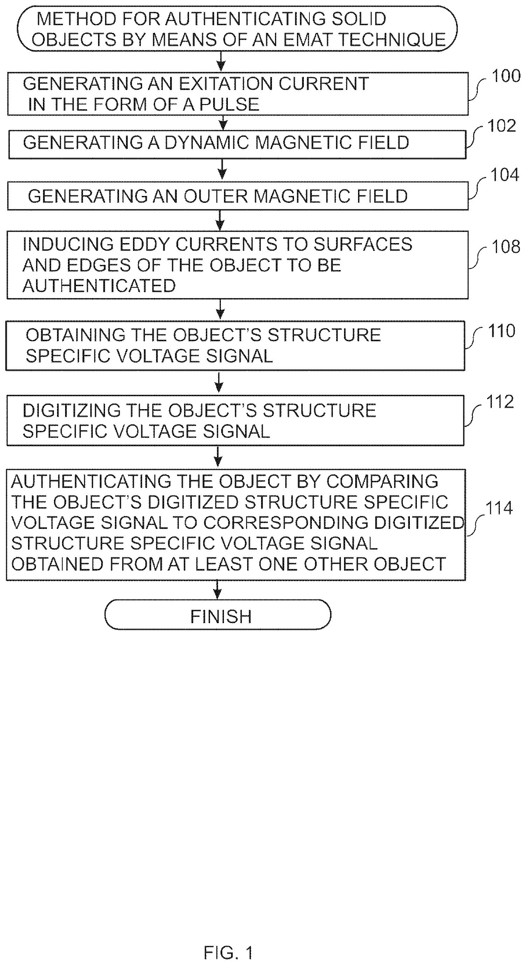

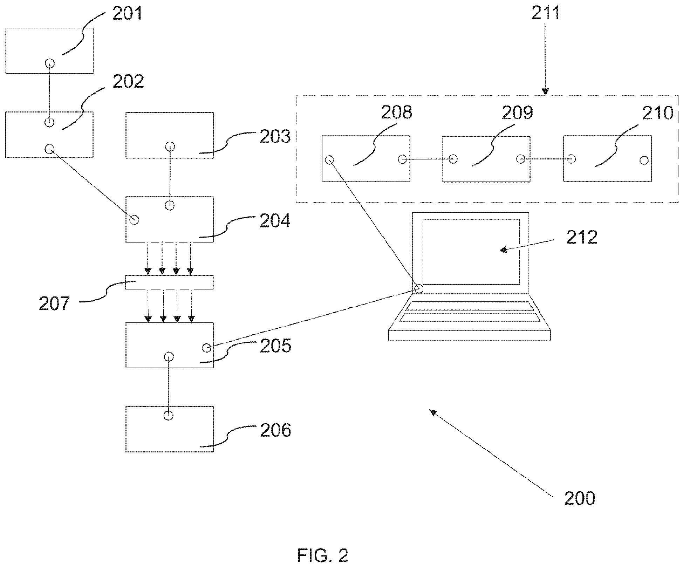

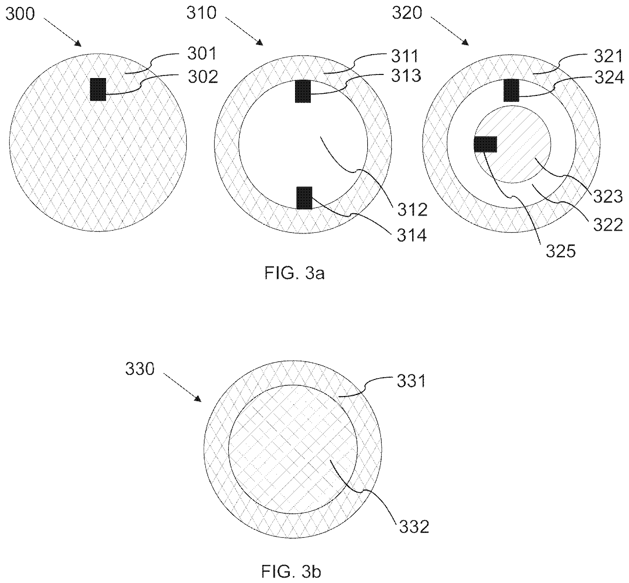

Figure 1 is a flow chart illustrating a method for authenticating solid objects by means of an EMAT technique. The method may be applied in a measurement system as illustrated in Figure 2. The method may be further applied when authenticating solid objects such as a coin illustrated in Figures 3a and 3b.

At step 100, an excitation current in the form of a pulse is generated. In one embodiment of the invention, the peak-to-peak value of the generated current pulse ranges from 200mA to 100A. The waveform of the generated excitation current pulse may comprise at least one period burst of a sinusoidal signal, a sinusoidal signal having one period or half a period, at least one period burst of a rectangular signal, a single period pulse and/or at least one shock excitation pulse. In addition, other preferable waveforms of the generated excitation current pulse comprise the following: at least one period burst of a sawtooth pulse, one period pulse, a half period pulse, at least one period burst of a shark fin pulse. Generation of the excitation current pulse also triggers the data acquisition system, i.e. obtaining, measuring and logging the voltage signal at step 114.

At step 102, a dynamic magnetic field is generated as the excitation current passes through the transmitting coil. The dynamic magnetic field is required for applying an electromotive force to the object to be authenticated. The magnetic flux density of the generated dynamic magnetic field depends e.g. on the peak-to-peak value of the generated excitation current pulse.

At step 104, an outer magnetic field is generated in order to create a Lorentz force. Said outer magnetic field is generated by means of at least one magnetic field source. The magnetic flux density of the generated outer magnetic field measured on the surface of the object to be authenticated may vary from 0.1T to 3T, preferably from 1T to 1.3T.

At step 108, eddy currents are induced to the surfaces and edges of the object to be authenticated due to the applied electromotive force. The Lorentz force action on the eddy currents generates the initial object's lattice displacement, which later launches a mechanical wave propagating in the lattice of the object. In one embodiment of the present invention, the displacement of the lattice from its equilibrium position due to vibration ranges from less than 1nm to 1mm, preferably from 80nm to 130nm.

At step 110, the object's structure specific voltage signal is obtained.

At step 112, the object's structure specific voltage signal is digitized.

At step 114, the object is authenticated by comparing the object's digitized structure specific voltage signal to a corresponding digitized structure specific voltage signal obtained from at least one other object.

Authentication is performed by digitally comparing the raw digitized data to corresponding data obtained from similar objects which form a reference group. Comparison may be done by using PLS and/or PLSDA algorithms. Said digitized data of the reference group may be stored in a digital form in a database, which is accessed during the comparison. If the data does not match the data obtained from the reference group, the object to be authenticated can be deemed unique, i.e. having certain structural properties not to be found from the group of reference objects. In case the obtained data does not differ from the corresponding data of the reference group, the object is deemed similar to the reference group.

Figure 2 is a block diagram showing an apparatus (200) for authentication of solid objects. Said apparatus may be applied when authenticating solid objects such as a coin illustrated in Figures 3a and 3b. Figure 2 shows an apparatus comprising means for generating an excitation current in the form of a pulse (201), means for adjusting the source impedance and maximizing the power transfer (202), at least one outer magnetic field source (203, 206), means for creating and transmitting a dynamic magnetic field (204) that acts on the object to be authenticated (207), means for detecting the object's structure specific voltage signal reflected from the object (204, 205) .

The apparatus (200) further comprises digital computing means (212) for receiving, amplifying, filtering, adjusting, digitizing and further processing the object's structure specific voltage signal reflected from the object. Said digital computing means (212) comprise means for amplifying, filtering and adjusting the object's structure specific voltage signal reflected from the object (208), means for digitizing the object's structure specific voltage signal (209), and means for authenticating the object by comparing the object's digitized structure specific voltage signal to a corresponding digitized structure specific voltage signal obtained from at least one other object. Said digital computing means (212) may optionally comprise displaying means (213) for displaying e.g. real-time information about the reflected signal.

According to the present invention, the means for generating an excitation current in the form of a pulse (201) are at least one pulse or voltage or current generator, such as commercially available pulse pattern generators (PPGs) or generators using power field-effect transistors (power FETs). Further, the means for adjusting the source impedance and maximizing the power transfer (202) are at least one matching circuit. In one embodiment of the present invention, at least one outer magnetic field source (203, 206) is at least one permanent magnet or electromagnet which produces a static, a quasi-static or a dynamic magnetic field.

According to the present invention, the means for creating and transmitting a dynamic magnetic field (204) that acts on the object to be authenticated (207) are at least one electric coil. Further, the means for detecting the object's structure specific voltage signal reflected from the object comprise at least one electric coil (204, 205) and at least one outer magnetic field source (206). According to one embodiment of the present invention, the apparatus (200) comprises at least two coils; the first coil is a so called transmission coil (204) and the second coil is a receiving coil (205). According to another embodiment of the present invention, the apparatus (200) comprises only one coil acting as a transmission coil and a receiving coil (204), in which case a separate receiving coil (205) and additional outer magnetic field source (206) are not required and can be removed from the apparatus.

According to another embodiment of the present invention, the apparatus (200), in addition to a transmission coil (204) and/or receiving coil (205), comprises several (e.g. 4-8) receiving coils, which coils can also act as transmitting coils. Said coils can be used as an aligned array to emphasize the positionally related received voltage signal obtained from a certain position from the object to be authenticated. It is desirable to obtain the received voltage signal induced in each coil separately. This requires the use of an own receiving channel for each coil or use of an intentionally created constant phase difference between each coil (via constant differences in the distance between them and the transmitting main coil). Said solution allows structure specific features to be detected in more detail, compared to the main authentication done by means of the transmission coil (204) and/or receiving coil (205).

Typical properties of the transmission coil and the receiver coil are listed in Table 1.

**Table 1.**

| Impedance | (1+j27)Ω |
|---|---|
| Width of one track | 0.05mm to 0.6mm |
| Width of a gap between tracks | 0.05mm to 0.4mm |
| Thickness of a track | 10µm to 50µm |
| Thickness of the PCB board | 40µm to 60µm |
| Material of the PCB board | Polyamide |
| Material of the coil track | Copper |
| Number of tracks | 5 to 25 |

The object's structure specific voltage signal is the voltage detected by the receiving coil (205). Said voltage is dependent on the excitation current in the form of a pulse (201), which is further altered by eddy currents induced by the propagation of a mechanical wave within the object to be authenticated (207).

The digital computing means (212) comprise means for amplifying, filtering and adjusting the reflected signal (208), which comprise at least one amplifier circuit, filtering circuit and/or matching circuit.

The digital computing means (211) further comprise means for digitizing the object's structure specific voltage signal (209). Said digitizing means comprise at least one digitizer.

The means for authenticating the object comprise pattern recognition, identification, characterization and authentication algorithms. Said algorithms perform at least the following tasks: noise filtering, detection of the object's structure specific voltage signal comprising discrete pulses, detection of the time of arrival of said pulses, the amplitude values and the frequency shifts of said pulses from the digitized structure specific voltage signal. Further, said algorithms perform calculation of physical properties of the studied object, said properties comprising at least one of the following: the thickness of the objects (and the dimensions in general), structural discontinuities within the object, material junctions within the object, i.e. structural changes from one material to another, tension fields at a certain depth within the object, a resonance frequency of the object. In addition, said algorithms perform calculation of material properties of the object comprising at least one of the following: propagation velocity or group velocity of the mechanical wave within the objects and its direction at a certain depth, conductivity at the skin depth, density, shear modulus, Young's modulus, Lamé's first parameter, the grain structure estimates at different depths within the object.

The digital computing means (211) may be stored on a general purpose computer, a personal computer, a laptop or similar device comprising a control unit including a processor, a memory and the input and output devices. The displaying means (212) comprise a visual display unit such as a screen or a monitor for displaying real-time information about the measurement parameters, the reflected signal, the determined characteristic features etc.

The apparatus (200) further comprises means for obtaining at least form of the signal between the voltage pulses from the object's structure specific voltage signal, and means for authenticating the object by comparing said at least one characteristic feature to at least one corresponding characteristic feature obtained from at least one other object's digitized structure specific voltage signal.

The means for obtaining at least one characteristic feature from the object's structure specific voltage signal comprise pattern recognition, identification and characterization algorithms. The means for authenticating the object based on at least one obtained characteristic feature comprise identification and authentication algorithms.

Said algorithms perform at least the following tasks: detecting the object's structure specific voltage signal and determining their amplitude and the time of arrival. In addition, the algorithms perform filtering irrelevant and/or false pulses caused by measurement noise or systematic and random errors from the reflected signal. After detecting and filtering the reflected signal, the algorithms assemble an eigenvector of the measured data and/or clusterize it. After that, the obtained eigenvector is compared to all eigenvector and/or cluster profiles in the database to determine whether the measured data is within acceptable tolerances and thus can be authenticated as a certain object. A typical example of an applicable method is the partial least squares method (PLS or PLSDA); other statistical methods, such as PLC and PCA can also be used. The algorithm may be a learning-based genetic algorithm that refreshes its database, i.e. learns about changes in the measurements and updates profiles if the measured data encompasses enough statistical significance, constantly after the "teaching" is performed.

Said at least one obtained characteristic feature may further comprise at least one of the following: the number of the induced voltage pulses during a time period, the time difference between the induced voltage pulses, the amplitude of the induced voltage pulses during a time period.

Figures 3a and 3b illustrate examples of metallic objects which may be authenticated by means of a method showed in the flow chart in Figure 1. Figure 3a displays a cross-section along the central horizontal plane of three different coins: a monometallic coin (300), a bi-metallic coin (310) and a tri-metallic coin (320). The monometallic coin comprises only one part, a core part (301). The bi-metallic coin (310) comprises a ring part (311) and a core part (312). The tri-metallic coin (320) comprises a ring part (321), an intermediate part (322) and a core part (323).

As a distinguishing feature, said coins comprise at least one cavity (302, 313, 314, 324, 325), which at least one cavity is not visible from the exterior of the coin or token. Said at least one cavity is formed by any of the known techniques widely used in the art, e.g. the laser etching or drilling, engraving, embossing, minting, punching, ion beam milling techniques. The above methods do not require detailed explanation for a skilled person, as they are well known and described in general technical literature. Further, said at least one cavity may comprise at least one of the following: a slit, a groove, a pocket, a recess.

In the case of a mono-metallic coin (300), said cavities may be formed in the core part. In the case of a bi-metallic coin (310), said cavities may be formed in the core part, the ring part or in both parts, or between the contact surfaces of the core part and the ring part. In the case of a tri-metallic coin (320), said cavities may be formed in at least one of the following parts: the ring part, the intermediate part, the core part, or between the contact surfaces of said parts.

Said at least one cavity may be empty of any material, in which case it is essentially an air pocket within the coin. Further, said at least one cavity may be at least partially filled with material having a different inner structure compared to the structure of the coin parts. Said at least one cavity and at least one other cavity may be arranged at different heights above or below the central horizontal plane of the coin, i.e. at different depths inside the coin, and/or at different distances from the central vertical axis of the coin. Further, dimensions and size of said at least one cavity and at least one other cavity may vary, i.e. the cavities may have different depths when measured from the horizontal surface of the coin towards the central horizontal plane. Further, the at least one cavity an at least one other cavity may be symmetrically arranged in the same horizontal plane around the longitudinal axis of the coin. Preferably, the distance between two cavities measured in the vertical plane may vary from 0.1mm to 0.3mm. Said arrangement provides the most reliable identification of the coin.

Each coin has its own vibration mode depending on the total number of cavities (302, 313, 314, 324, 325) and their orientation within the coin (300, 310, 320). Different vibration modes provide each coin a structure specific voltage signal, which may be detected with an apparatus illustrated in Figure 2. The structure specific voltage signal enables each coin to be authenticated or to be distinguished from other coins of the same shape, weight etc. In the case when the at least one cavity is at least partially filled with a material having a different inner structure compared to the structure of the coin parts, the at least partially filled cavity causes a tension field into the coin. Due to said tension field, a coin having at least one at least partially filled cavity has a distinctive vibration mode and thus a distinctive voltage signal. Therefore, also coins having at least partially filled cavities may be authenticated by means of a method illustrated in Figure 1.

Figure 3b shows a design of a bi-metallic coin (330), comprising a ring part (331) and a core part (332). Said parts are manufactured from different metals or metal alloys having different recrystallation temperatures, T₁ for the edge part and T₂ for the centre part. After the regular manufacturing process, the coin or the coin blank is heat treated at a temperature which is between said two recrystallation temperatures. In the treatment, the metal having a lower recrystallation temperature recrystallizes, while the metal having a higher recrystallation temperature does not. After the treatment, the coin comprises both recrystallized metal and non-recrystallized metal, which gives said coin its own vibration mode depending on the metals used during minting of the coin and the temperature of the heat treatment. Because of the distinctive vibration modes, said coin also produces a distinctive voltage signal and thus may be authenticated by means of a method illustrated in Figure 1.

Typically, the metals are chosen so that the metal of the ring part has a higher recrystallation temperature than the core part. Therefore, during the heat treatment, the metal of the ring part does not recrystallize and thus remains harder than that of the core part. A harder ring part is desirable as it protects the softer core part from wear and mechanical damages.

It is important to note that, as is clear for a person skilled in the art, the invention is not limited to the examples described above. The actual embodiments of the present invention can freely vary within the scope of the claims.

## Claims

1. A method for authenticating solid objects, **characterized in that** authentication is performed by means of an electromagnetic acoustic transducer technique, wherein the method further comprises:
- generating an excitation current in the form of a pulse,
- generating a dynamic magnetic field for applying an electromotive force to the object to be authenticated,
- generating an outer magnetic field in order to create a Lorentz force,
- inducing eddy currents to the surfaces and edges of the object to be authenticated, thereby causing the lattice of the object to vibrate around its equilibrium position by means of the Lorentz force acting on the eddy currents, thus producing a mechanical wave propagating in the lattice of the object for inducing eddy currents by means of the propagating mechanical wave,
- obtaining the object's structure specific voltage signal,
- digitizing the object's structure specific voltage signal,
- obtaining at least one characteristic feature from the object's digitized structure specific voltage signal, where the object's digitized structure specific voltage signal comprises the form of the signal between the voltage pulses,
- authenticating the object by comparing said at least one characteristic feature to at least one corresponding characteristic feature obtained from at least one other object's digitized structure specific voltage signal.

2. A method according to claim 1, **characterized in that** the comparison is done by using PLS and/or PLSDA algorithms.

3. A method according to claim 1 or 2, **characterized in that** in generating an excitation current in the form of a pulse, a current pulse with a peak-to-peak value ranging from 200mA to 100A is generated.

4. A method according to any of claims 1 to 3, **characterized in that** the waveform of the generated excitation current pulse is a burst of a sinusoidal signal having at least one period.

5. A method according to any of claims 1 to 3, **characterized in that** the waveform of the generated excitation current pulse is a sinusoidal signal having one period or half a period.

6. A method according to any of claims 1 to 3, **characterized in that** the waveform of the generated excitation current pulse is at least one period burst of a rectangular signal.

7. A method according to any of claims 1 to 6, **characterized in that** the magnetic flux density of the outer magnetic field ranges from 0.1T to 3T, preferably from 1T to 1.3T.

8. A method according to any of claims 1 to 7, **characterized in that** the at least one characteristic feature obtained from the voltage signal further comprises at least one of the following: the number of the induced voltage pulses during a time period, the amplitude of the induced voltage pulses during a time period.

9. A method according to any of claims 1 to 8, **characterized in that** the object to be authenticated comprises an electrical conductor and/or semiconductor.

10. A method according to any of claims 1 to 9, **characterized in that** the object to be authenticated comprises at least one of the following: a coin, a token, a coin blank.

11. A method according to any of claims 1 to 10, **characterized in that** the object to be authenticated comprises at least one of the following: a semiconductive wafer, a semiconductive membrane, a semiconductive thin film, a semiconductive resonator element, a drill bit, a nut, a screw, a bolt, a blade, a cutter.

12. An apparatus for authenticating solid objects, **characterized in that** authentication is performed by means of an electromagnetic acoustic transducer technique, wherein the apparatus further comprises:
- means (201) for generating an excitation current in the form of a current pulse,
- means (202) for adjusting the source impedance and maximizing the power transfer,
- at least one outer magnetic field source (203, 206),
- means (204) for creating and transmitting a dynamic magnetic field that acts on the object to be authenticated,
- means (205) for detecting the object's structure specific voltage signal reflected from the object,
- means (208) for amplifying, filtering and adjusting the object's structure specific voltage signal,
- means (209) for digitizing the object's structure specific voltage signal,
- means for obtaining at least one characteristic feature from the object's structure specific voltage signal, where the object's digitized structure specific voltage signal comprises the form of the signal between the voltage pulses, and
- means for authenticating the object by comparing said at least one characteristic feature to at least one corresponding characteristic feature obtained from at least one other object's digitized structure specific voltage signal.

## Patentansprüche

1. Ein Verfahren zum Authentifizieren fester Objekte, **dadurch gekennzeichnet, dass** die Authentifizierung mittels einer elektromagnetisch-akustischen Wandlertechnik durchgeführt wird, wobei das Verfahren ferner umfasst:
- Erzeugung eines Erregerstrom in Form eines Impulses,
- Erzeugung eines dynamischen Magnetfeldes zum Aufbringen einer elektromotorischen Kraft auf das zu authentifizierende Objekt,
- Erzeugung eines äußeren Magnetfeldes, um eine Lorentz-Kraft zu erzeugen,
- Induktion von Wirbelströmen an den Oberflächen und Kanten des zu authentifizierenden Objekts, wodurch das Gitter des Objekts durch die auf die Wirbelströme wirkende Lorentz-Kraft um seine Gleichgewichtslage in Schwingung versetzt wird, wodurch eine mechanische Welle erzeugt wird, die sich im Gitter des Objekts ausbreitet, um durch die sich ausbreitende mechanische Welle Wirbelströme zu induzieren,
- Erhalten des strukturspezifischen Spannungssignals des Objekts,
- Digitalisierung des strukturspezifischen Spannungssignals des Objekts,
- Erhalten mindestens eines charakteristischen Merkmals aus dem digitalisierten strukturspezifischen Spannungssignal des Objekts, wobei das digitalisierte strukturspezifische Spannungssignal des Objekts die Form des Signals zwischen den Spannungsimpulsen umfasst,
- Authentifizierung des Objekts durch Vergleichen des mindestens einen charakteristischen Merkmals mit mindestens einem entsprechenden charakteristischen Merkmal, das aus dem digitalisierten strukturspezifischen Spannungssignal mindestens eines anderen Objekts erhalten wurde.

2. Ein Verfahren nach Anspruch 1, **dadurch gekennzeichnet, dass** der Vergleich unter Verwendung von PLS- und/oder PLSDA-Algorithmen durchgeführt wird.

3. Ein Verfahren nach Anspruch 1 oder 2, **dadurch gekennzeichnet, dass** bei der Erzeugung eines Erregerstroms in Form eines Impulses ein Stromimpuls mit einem Peak-Peak-Wert im Bereich von 200mA bis 100A erzeugt wird.

4. Ein Verfahren nach einem der Ansprüche 1 bis 3, **dadurch gekennzeichnet, dass** die Wellenform des erzeugten Erregerstromimpulses ein Burst eines sinusförmigen Signals mit mindestens einer Periode ist.

5. Ein Verfahren nach einem der Ansprüche 1 bis 3, **dadurch gekennzeichnet, dass** die Wellenform des erzeugten Erregerstromimpulses ein sinusförmiges Signal mit einer Periode oder einer halben Periode ist.

6. Ein Verfahren nach einem der Ansprüche 1 bis 3, **dadurch gekennzeichnet, dass** die Wellenform des erzeugten Erregerstromimpulses mindestens ein Perioden-Burst eines Rechtecksignals ist.

7. Ein Verfahren nach einem der Ansprüche 1 bis 6, **dadurch gekennzeichnet, dass** die die magnetische Flussdichte des äußeren Magnetfeldes im Bereich von 0,1T bis 3T, vorzugsweise von 1T bis 1,3T, liegt.

8. Ein Verfahren nach einem der Ansprüche 1 bis 7, **dadurch gekennzeichnet, dass** das mindestens eine charakteristische Merkmal, das aus dem Spannungssignal erhalten wird, ferner mindestens eines der folgenden umfasst: die Anzahl der induzierten Spannungsimpulse während einer Zeitperiode, die Amplitude der induzierten Spannungsimpulse während einer Zeitperiode.

9. Ein Verfahren nach einem der Ansprüche 1 bis 8, **dadurch gekennzeichnet, dass** das zu authentifizierende Objekt einen elektrischen Leiter und/oder Halbleiter umfasst.

10. Ein Verfahren nach einem der Ansprüche 1 bis 9, **dadurch gekennzeichnet, dass** das zu authentifizierende Objekt mindestens eines der folgenden umfasst: eine Münze, eine Wertmarke, einen Münzrohling.

11. Ein Verfahren nach einem der Ansprüche 1 bis 10, **dadurch gekennzeichnet, dass** das zu authentifizierende Objekt mindestens eines der folgenden umfasst: eine Halbleiterscheibe, eine Halbleitermembran, einen halbleitenden dünnen Film, ein halbleitendes Resonator-Element, einen Bohrer, eine Mutter, eine Schraube, einen Bolzen, eine Klinge, ein Schneidwerkzeug.

12. Eine Vorrichtung zum Authentifizieren fester Objekte, **dadurch gekennzeichnet, dass** die Authentifizierung mittels einer elektromagnetisch-akustischen Wandlertechnik durchgeführt wird, wobei die Vorrichtung ferner umfasst:
- Mittel (201) zur Erzeugung eines Erregerstrom in Form eines Impulses,
- Mittel (202) zur Anpassung der Quellenimpedanz und zur Maximierung der Leistungsübertragung;
- mindestens eine äußere Magnetfeld-Quelle (203, 206),
- Mittel (204) zur Erzeugung und Übertragung eines dynamischen Magnetfeldes, das auf das zu authentifizierende Objekt einwirkt,
- Mittel (205) zur Erkennung des strukturspezifischen Spannungssignals des Objekts, das vom Objekt reflektiert wird,
- Mittel (208) zum Amplifizieren, Filtern und Anpassen des strukturspezifischen Spannungssignals des Objekts
- Mittel (209) zur Digitalisierung des strukturspezifischen Spannungssignals des Objekts,
- Mittel zum Erhalten mindestens eines charakteristischen Merkmals aus dem strukturspezifischen Spannungssignal des Objekts, wobei das digitalisierte strukturspezifische Spannungssignal des Objekts die Form des Signals zwischen den Spannungsimpulsen umfasst, und
- Mittel zur Authentifizierung des Objekts durch Vergleichen des mindestens einen charakteristischen Merkmals mit mindestens einem entsprechenden charakteristischen Merkmal, das aus dem digitalisierten strukturspezifischen Spannungssignal mindestens eines anderen Objekts erhalten wurde.

## Revendications

1. Procédé d'authentification d'objets solides, **caractérisé en ce que** l'authentification est effectuée au moyen d'une technique de transducteur acoustique électromagnétique, dans lequel le procédé comprend en outre:
- génération d'un courant d'excitation sous la forme d'une impulsion,
- génération d'un champ magnétique dynamique pour appliquer une force électromotrice à l'objet à authentifier,
- génération d'un champ magnétique extérieur afin de créer une force de Lorentz,
- induction de courants de Foucault aux surfaces et aux bords de l'objet à authentifier, faisant ainsi vibrer le réseau de l'objet autour de sa position d'équilibre au moyen de la force de Lorentz agissant sur les courants de Foucault, produisant ainsi une onde mécanique se propageant dans le réseau de l'objet pour induire des courants de Foucault au moyen de l'onde mécanique se propageant,
- obtention du signal de tension spécifique de la structure de l'objet,
- numérisation du signal de tension spécifique de la structure de l'objet,
- obtention d'au moins un élément caractéristique à partir du signal de tension numérisée spécifique de la structure de l'objet, dans lequel le signal de tension numérisé spécifique de la structure de l'objet comprend la forme du signal entre les impulsions de tension,
- authentification de l'objet par comparaison dudit au moins un élément caractéristique à au moins un élément caractéristique correspondant obtenu à partir d'au moins un autre signal de tension numérisé spécifique de structure d'un objet

2. Procédé selon la revendication 1, **caractérisé en ce que** la comparaison est effectuée en utilisant les algorithmes PLS et / ou PLSDA.

3. Procédé selon la revendication 1 ou 2, **caractérisé en ce que** lors de la génération d'un courant d'excitation sous la forme d'une impulsion, une impulsion de courant avec une valeur de crête à crête allant de 200 mA à 100 A est générée.

4. Procédé selon l'une quelconque des revendications 1 à 3, **caractérisé en ce que** la forme d'onde de l'impulsion du courant d'excitation générée est une salve d'un signal sinusoïdal ayant au moins une période.

5. Procédé selon l'une quelconque des revendications 1 à 3, **caractérisé en ce que** la forme d'onde de l'impulsion du courant d'excitation générée est un signal sinusoïdal ayant une période ou une demi-période.

6. Procédé selon l'une quelconque des revendications 1 à 3, **caractérisé en ce que** la forme d'onde de l'impulsion du courant d'excitation générée est au moins une période de salve d'un signal rectangulaire.

7. Procédé selon l'une quelconque des revendications 1 à 6, **caractérisé en ce que** la densité de flux magnétique du champ magnétique externe est comprise entre 0,1 T et 3 T, de préférence entre 1T et 1,3 T.

8. Procédé selon l'une quelconque des revendications 1 à 7, **caractérisé en ce que**, le au moins un élément caractéristique obtenu à partir du signal de tension comprend en outre au moins l'un des éléments suivants: le nombre d'impulsions de tension induites pendant une période de temps, l'amplitude des impulsions de tension induites pendant une période de temps.

9. Procédé selon l'une quelconque des revendications 1 à 8, **caractérisé en ce que** l'objet à authentifier comprend un conducteur électrique et / ou un semi-conducteur.

10. Procédé selon l'une quelconque des revendications 1 à 9 **caractérisé en ce que** l'objet à authentifier comprend au moins l'un des éléments suivants: une pièce de monnaie, un jeton, un flan de pièce de monnaie.

11. Procédé selon l'une quelconque des revendications 1 à 10 **caractérisé en ce que** l'objet à authentifier comprend au moins l'un des éléments suivants: une plaquette semi-conductrice, une membrane semi-conductrice, un film mince semi-conducteur, un élément résonateur semi-conducteur, un trépan de forage, un écrou, une vis, un boulon, une lame, un cutter.

12. Appareil pour authentifier des objets solides, **caractérisé en ce que** l'authentification est effectuée au moyen d'une technique de transducteur acoustique électromagnétique, dans lequel l'appareil comprend en outre:
- des moyens (201) pour générer un courant d'excitation sous la forme d'une impulsion de courant,
- des moyens (202) pour ajuster l'impédance de la source et maximiser le transfert de puissance,
- au moins une source (203, 206) de champ magnétique externe,
- des moyens (204) pour créer et transmettre un champ magnétique dynamique qui agit sur l'objet à authentifier,
- des moyens (205) pour détecter le signal de tension spécifique de la structure de l'objet réfléchi par l'objet,
- des moyens (208) pour amplifier, filtrer et ajuster le signal de tension spécifique de la structure de l'objet,
- des moyens (209) pour numériser le signal de tension spécifique de la structure de l'objet,
- des moyens pour obtenir au moins un élément caractéristique à partir du signal de tension spécifique de la structure de l'objet, dans lequel le signal de tension numérisé spécifique de la structure de l'objet comprend la forme du signal entre les impulsions de tension, et
- des moyens pour authentifier l'objet par comparaison dudit au moins un élément caractéristique à au moins un élément caractéristique correspondant obtenu à partir d'au moins un autre signal de tension numérisé spécifique de structure d'un objet.
